# EUROPEAN PATENT SPECIFICATION

(11) **EP 3 862 116 B1**
(45) Date of publication and mention of the grant of the patent: **27.08.2025**
(21) Application number: 19886890.3
(22) Date of filing: 30.10.2019
(51) Int. Cl.: G05B 19/401, G05B 19/416, B23Q 17/12, B23Q 17/10, B23B 25/06, B23B 5/14, B23B 3/30, G05B 19/19

(54) **LATHE**
DREHBANK
TOUR

(30) Priority: 22.11.2018 JP 2018219476
(43) Date of publication of application: 11.08.2021
(73) Proprietor: Star Micronics Co., Ltd., Shizuoka-shi, Shizuoka 422-8654 (JP)
(72) Inventor: KAKU, Norio, Shizuoka-shi, Shizuoka 422-8654 (JP)
(74) Representative: Manitz Finsterwald Patent- und Rechtsanwaltspartnerschaft mbB
(86) International application number: PCT/JP2019/042458
(87) International publication number: WO 2020/105383

(56) References cited:
- JP-A- H0 639 603
- JP-A- H01 316 102
- JP-A- H01 316 102
- JP-A- H05 138 404
- JP-A- S6 311 202
- US-A- 4 831 907
- HELMAN CNC: "Tool retract and recover - Definition from CNC Dictionary - Helman CNC", 21 April 2018 (2018-04-21), pages 1 - 2, XP055921560, Retrieved from the Internet <URL:https://web.archive.org/web/20180421074139/http://www.helmancnc.com/tool-retract-and-recover/> [retrieved on 20220516]

## Description

### TECHNICAL FIELD

The present invention relates to a lathe capable of determining whether a workpiece held by two opposite spindles is normally cut-off.

### BACKGROUD ART

In a well-known NC (numerical control) lathe, a front side of a workpiece held by a front spindle is machined and the workpiece is then passed to a back spindle for back machining to be performed on a back side of the workpiece. A cut-off tool is used to cut-off the workpiece rotatably held by the opposite front and back spindles. Breakage of the cut-off tool would cause a cut-off failure and thereby hinder success of a subsequent machining. It is therefore necessary to determine whether the workpiece has been normally cut-off.

Generally, a workpiece detecting pin is advanced to a position between the front spindle and the back spindle to check whether the pin hits the workpiece. The pin is provided with a contact switch. If the switch is not activated, it is determined that the the workpiece has been normally cut-off. If the switch is activated, it is determined that a cut-off failure has happened and then the machine stops. The workpiece is rotated at high speed during the cut-off process. The spindle rotation speed needs reduction before the pin is advanced to prevent a collision with the workpiece rotating at high speed. Thereafter, the spindle rotation speed needs to be restored to a level suitable for a subsequent machining

Patent Document 1 discloses a cut-off process in a lathe provided with phase synchronizing control means for two coaxially-opposite spindles. The phase synchronizing control means includes a phase difference detecting unit for detecting a phase difference between the rotating first spindle and the rotating second spindle and further a correction instructing unit for correcting a speed command given to a spindle motor according to the detected phase difference. The first spindle and the second spindle are operated synchronously and then the workpiece held by the spindles is cut-off. A feedback output of the correction instructing unit is disconnected and then different rotation speed commands are respectively given to a first spindle motor and a second spindle motor. If a phase difference detected by the phase difference detecting unit exceeds a setting value, a start of a next machining is permitted.
Further lathes capable of checking the cutting-off operation of a workpiece fixed in a first spindle and a second spindle are disclosed in Patent Documents 2 and 3.

### PRIOR ART DOCUMENT

### PATENT DOCUMENT

Patent Document 1: Japanese Patent Application Publication No. H5-138404
Paten Document 2: Japanese Patent Application Publication No. H01-316102
Patent Document 3: United States Patent No.: 4,831,907

### TECHNICAL PROBLEM

The conventional method using the workpiece detecting pin takes a longer determining time since the spindle rotation speed is necessarily reduced before the pin is advanced. The conventional method using the phase difference takes a longer determining time since the spindle rotation speed is necessarily changed between the first spindle and the second spindle after the cut-off process ends. Such slow determining process prolongs a cycle time of workpiece machining.

Therefore it is an object of the present invention to provide a lathe capable of shortening a cycle time of workpiece machining.

### TECHNICAL SOLUTION

This object is solved by a lathe comprising the features of claim 1.

The invention provides a lathe capable of shortening a cycle time of workpiece machining.

### BRIEF DESCRIPTION OF THE DRAWINGS

FIG. 1 schematically shows an NC lathe.
FIG. 2 is a block diagram schematically showing an electrical circuit in the lathe.
FIG. 3 schematically shows how a workpiece is normally cut-off.
FIG. 4 schematically shows how a cut-off failure happens.
FIG. 5 is a graph showing fluctuations in rotation speed of a spindle with a lapse of time when the workpiece is normally cut-off.
FIG. 6 is a graph showing fluctuations in rotation speed of the spindle with a lapse of time when a cut-off failure happens.
FIG. 7 is a flow chart showing a cut-off process in the lathe.
FIG. 8 is a flow chart showing another cut-off process in the lathe.
FIG. 9 schematically shows a detecting apparatus 900 in a comparative example which determines whether the workpiece WO is normally cut-off.
FIG. 10 is a graph showing the rotation speed of the spindle with a lapse of time in a comparative example

### MODE FOR INVENTION

Hereinafter, an embodiment of the present invention will be described. The invention is not limited to the exemplary embodiment and the features disclosed herein are not necessarily essential to the invention.

### (1) Technology included in the invention:

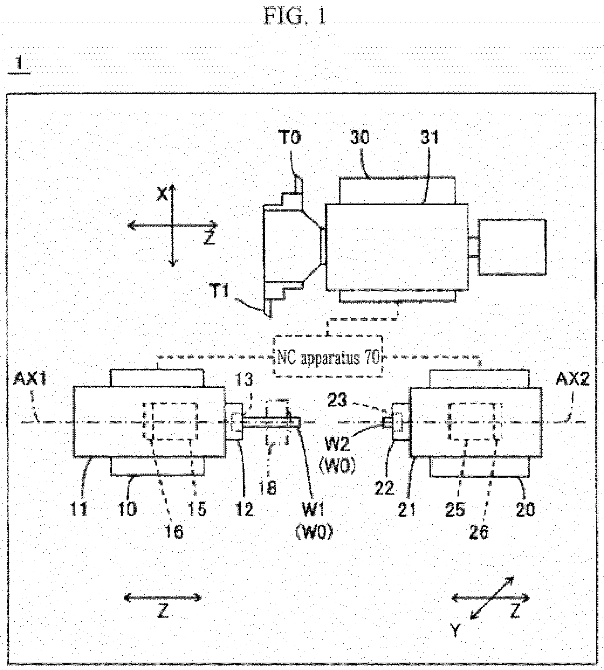

Technology of the invention will be described with reference to FIG. 1 to FIG. 10. The drawings only schematically show an example of the invention. They may have a mismatch to each other due to different magnification in each direction. Each element denoted by a symbol is only an example. The range of values (the minimum to the maximum) means the minimum or more and the maximum or less.

The lathe of the invention includes a first spindle (a front spindle 12, for example), a second spindle (a back spindle 22, for example), a tool post 31, and a control unit U1. The first spindle (12) holding a workpiece WO is configured to rotate on a spindle axis AX1. The second spindle (22) being opposite the first spindle (12) and holding the workpiece WO is configured to rotate on a spindle axis AX2 preferably aligned with the spindle axis AX1. A cut-off tool T1 is attached to the tool post 31 for use to cut the workpiece WO held by the first spindle (12) and the second spindle (22). The control unit U1 is configured to control rotation of the first spindle (12) and the second spindle (22) and further to control relative movement of the first spindle (12) and the second spindle (22) and the tool post 31 to cut-off the workpiece WO. The control unit U1 is further configured to add a rotation speed fluctuation to the rotation speed V1 of the first spindle (12) after rotating the first spindle (12) and the second spindle (22) synchronously and detect the rotation speed V2 of the second spindle (22). The control unit U1 determines that the workpiece WO has been normally cut-off upon determining that a detected fluctuation (a fluctuation width ΔV2, for example) in the rotation speed V2 is within a predetermined range (below a threshold value TH, for example).

The first spindle (12) and the second spindle (22) both holding the workpiece WO are synchronously operated and then a rotation speed fluctuation is added to the rotation speed V1 of the first spindle (12). If the workpiece WO has been remained uncut between the first spindle (12) and the second spindle (22), the fluctuation added to the rotation speed V1 influences the rotation speed V2 of the second spindle (22). If the workpiece WO has been normally cut-off, the fluctuation added to the rotation speed V1 never influences the rotation speed V2. Accordingly, it can be determined that the workpiece has been normally cut-off if the detected fluctuation in the rotation speed V2 of the second spindle (22) is within the predetermined range. The rotation speed V2 may be detected and the detected fluctuation in the rotation speed V2 may be used to determine whether the workpiece has been normally cut-off. Since the cut-off success can be determined immediately after the cut-off process, the invention provides a lathe capable of shortening a cycle time of workpiece machining.

The first spindle may be the front spindle while the second spindle may be the back spindle. Instead, the first spindle may be the back spindle while the second spindle may be the front spindle. Relative movement of the first and the second spindles and the tool post may include variations. Only the tool post may move without movement of the spindles. Instead, only the spindles may move without movement of the tool post. Instead, both the spindles and the tool post may move. The control unit may determine that the workpiece has been normally cut-off when it determines that the detected fluctuation is within the predetermined range after several determining steps which have been repeated since the detected fluctuation is still outside the predetermined range. Instead, the control unit may immediately determine that the workpiece has been normally cut-off when it determines that the detected fluctuation is within the predetermined range at the first time it detects the rotation speed of the second spindle.

The control unit U1 adds a rotation speed fluctuation to the rotation speed V1 of the first spindle (12) and detects the rotation speed V2 of the second spindle (22) while moving the tool post 31 to the cut-off end position (an X=+Xe position, for example). The control unit U1 determines that the workpiece WO has been normally cut-off when a detected fluctuation (ΔV2) of the rotation speed V2 is within the predetermined range. The invention provides a lathe of simple configuration since there is no need of moving the first spindle (12) and the second spindle (22) in a direction perpendicular to the spindle axis AX1 (an X-axis direction, for example).

### (2) Configuration of the lathe:

FIG. 1 schematically shows a configuration of an NC (numerical control) lathe 1 provided with a movable front spindle 12. FIG. 1 is only a simplified example for explanation and the invention is not limited thereto. A positional relation between elements is only an example for explanation. The left and right direction may be replaced by the up and down direction or the front and back direction. The up and down direction may be replaced by the left and right direction or the front and back direction. The front and back direction may be replaced by the left and right direction or the up and down direction. The rotational direction may be inversed. If something is the same as something in direction or position, they may be the same or almost the same within an error range.

The lathe 1 may include an NC apparatus 70, a front headstock 11 mounted on a fixed base 10, a back headstock 21 mounted on a fixed base 20, a tool post 31 mounted on a fixed base 30. The NC apparatus 70 may control operations of the front headstock 11, the back headstock 21, and the tool post 31.

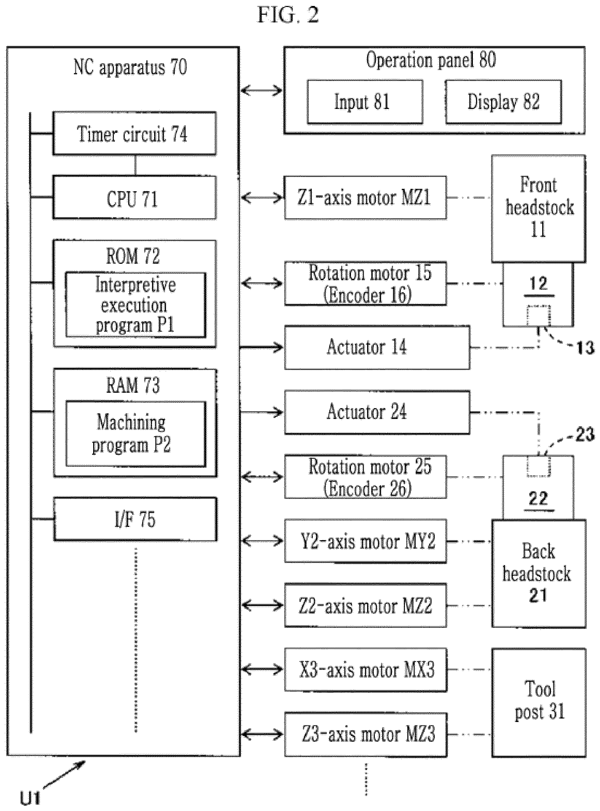

The front headstock 11 may move in a Z-axis direction along the spindle axis AX1. The NC apparatus 70 may control a Z-axis position of the front headstock 11 by a driving unit such as a Z1-axis motor MZ1 as shown in FIG. 2. The front spindle 12 mounted on the front headstock 11 is provided with a chuck 13 such as a collet to releasably hold a cylindrical (bar) workpiece W1 inserted in the Z-axis direction. The NC apparatus 70 may rotate the front spindle 12 on the spindle axis AX1 extended in the longitudinal direction of the workpiece W1 by a driving unit such as a rotation motor 15. The front spindle 12 may thereby rotate the workpiece W1 on the spindle axis AX1.

A guide bush 18 may be provided in a position on the front side of the front spindle 12 as shown by a two-dot line in FIG. 1. The guide bush 18 may slidably support the longitudinal workpiece W1 inserted in the front spindle 12 in the Z-axis direction. The guide bush 18 may be rotatable on the spindle axis AX1 in synchronization with the front spindle 12.

The back headstock 21 may be movable in the Z-axis direction along the spindle axis AX2 and a Y-axis direction perpendicular to the Z-axis direction. The NC apparatus 70 may control a Z-axis position and a Y-axis position of the back headstock 21 by a driving unit such as a Z2-axis motor MZ2 and a Y2-axis motor MY2 as shown in FIG. 2. The back spindle 22 mounted on the back headstock 21 may be provided with a chuck 23 such as a collet to releasably hold a workpiece W2, whose front side has been machined, inserted in the Z-axis direction with the spindle axes AX1 and AX2 are aligned. The NC apparatus 70 may rotate the back spindle 22 on the spindle axis AX2 by a driving unit such as a rotation motor 25. The back spindle 22 may thereby rotate the workpiece W2 on the spindle axis AX2. The back spindle 22 may be referred to as an opposite spindle since it is opposite the front spindle. The workpiece W1 and the workpiece W2 whose front side has been machined may be collectively called the workpiece WO. The workpiece held by the chucks 13 and 23 of the spindles 12 and 22 may be called the workpiece WO.

The tool post 31 to which a plurality of tools T0 are attached may be movable in the X-axis direction and the Z-axis direction. The X-axis direction may be a direction perpendicular to the Z-axis direction and the Y-axis direction. The NC apparatus 70 may control an X-axis position and a Z-axis position of the tool post 31 by a driving unit such as an X3-axis motor MX3 and a Z3-axis motor MZ3 as shown in FIG. 2. The plurality of the tools T0 may include a cut off tool T1 for use to cut-off the workpiece WO held by the chucks 13 and 23 of the spindles 12 and 22. The tool post may include a turret tool post and a gang tool post. The lathe may be provided with a plurality of the tool posts. The moving direction of the front headstock 11, the back headstock 21, and the tool post 31 may not be limited to those shown in FIG. 1.

FIG. 2 schematically shows a configuration of an electrical circuit in the NC lathe 1. The NC apparatus 70 may include an operation panel 80, the Z1-axis motor MZ1, the Y2-axis motor MY2, the Z2-axis motor MZ2, the X3-axis motor MX3, the Z3-axis motor MZ3, the rotation motor 15 for driving the front spindle 12, the rotation motor 25 for driving the back spindle 22, an actuator 14 for opening and closing the chuck 13 of the front spindle 12, and an actuator 24 for opening and closing the chuck 23 of the back spindle 22. The NC apparatus 70 may be a computer including a CPU (Central Processing Unit) 71, a semiconductor memory including a ROM (Read Only Memory) 72 and a RAM (Random Access Memory) 73, a timer circuit 74, and an I/F (Interface) 75. The I/F 75 may include interfaces for the operation panel 80, the servo motors MZ1, MY2, MZ2, MX3, and MZ3, the rotation motors 15 and 25, and the actuators 14 and 24. The ROM 72 may store an interpretive execution program P1 for use in interpreting and executing a machining program P2. The RAM 73 may rewritably store the machining program P2 prepared by an operator. The machining program P2 may be also called an NC program. The CPU 71 may use the RAM 73 as a work area to execute the interpretive execution program P1 stored in the ROM 72. Part or all of the functions achieved by the interpretive execution program P1 may be executed by another means such as ASIC (Application Specific Integrated Circuit).

The operation panel 80 may include an input 81 and a display 82 serving as a user interface of the NC apparatus 70. The input 81 may include a button and a touch panel for accepting an input by the operator. The display 82 may display various information relating to settings ordered by the operator and various information relating to the NC lathe 1. The machining program P2 may be stored in the RAM 73 by the operator via the operation panel 80 and an external computer.

The Z1-axis motor MZ1 may drive the front headstock 11 in the Z-axis direction upon receipt of a command from the NC apparatus 70. The Y2-axis motor MY2 may drive the back headstock 21 in the Y-axis direction upon receipt of a command from the NC apparatus 70. The Z2-axis motor MZ2 may drive the back headstock 21 in the Z-axis direction upon receipt of a command from the NC apparatus 70. The X3-axis motor MX3 may drive the tool post 31 in the X-axis direction upon receipt of a command from the NC apparatus 70. The Z3-axis motor MZ3 may drive the tool post 31 in the Z-axis direction upon receipt of a command from the NC apparatus 70.

The rotation motor may include an encoder 16. The encocer 16 may generate a reference angle pulse of an interval according to the rotation speed of the front spindle 12. The rotation motor 15 may drive the front spindle 12 in response to a command from the NC apparatus 70. The rotation motor 25 may include an encoder 26. The encoder 26 may generate a reference angle pulse of an interval according to the rotation speed of the back spindle 22. The rotation motor 25 may drive the back spindle 22 in response to a command from the NC apparatus 70. The rotation speed may be also called a number of rotations meaning the number of rotations per unit time.

The actuator 14 may open and close the chuck 13 of the front spindle 12 through a power transmission mechanism such as a sleeve under control of the NC apparatus 70. Opening the chuck 13 may allow the workpiece to move in the Z-axis direction. Closing the chuck 13 may unmovably hold the workpiece. The actuator 24 may open and close the chuck 23 of the back spindle 22 through a power transmission mechanism such as a sleeve under control of the NC apparatus 70. Opening the chuck 23 may allow the workpiece to move in the Z-axis direction. Closing the chuck 23 may unmovably hold the workpiece. The actuators 14 and 24 each may include a servo motor such as a linear motor, an air cylinder, and a hydraulic cylinder. The actuators may include a deceleration mechnism such as a ball screw mechanism.

The front spindle 12 may be an example of the first spindle. The back spindle 22 may be an example of the second spindle. The NC apparatus 70, the rotation motors 15 and 25, and the X3-axis motor MX3 may be examples of the control unit U1.

### (3) Embodiment of a cut-off process:

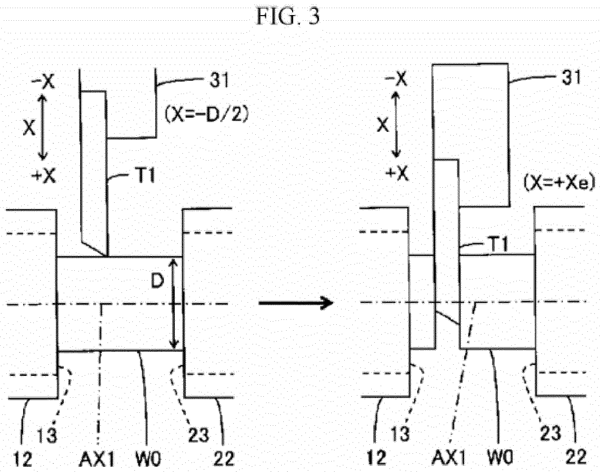

FIG. 3 schematically shows how the workpiece is normally cut-off with the cut-off tool T1 attached to the tool post 31 in the lathe having no guide bush. The cut-off process may be similarly performed in a lathe having a guide bush. The left diagram shows that a cutting edge of the cut-off tool T1 is advanced to an X=-D/2 position when the workpiece WO of diameter D is held by the chuck 13 of the front spindle 12 and by the chuck 23 of the back spindle 22 approaching the front spindle 12. The tool post 31 may further advance in the +X direction to further cut the workpiece WO while the both spindles 12 and 22 are rotated at rotation speed set for the cut-off process. The workpiece WO may be normally cut off at an X=0 position corresponding to the center of the workpiece WO. Actually, the tool post 31 may move to an X=+Xe (Xe>0) position corresponding to a cut-off end position beyond the X=0 position as shown in the right diagram.

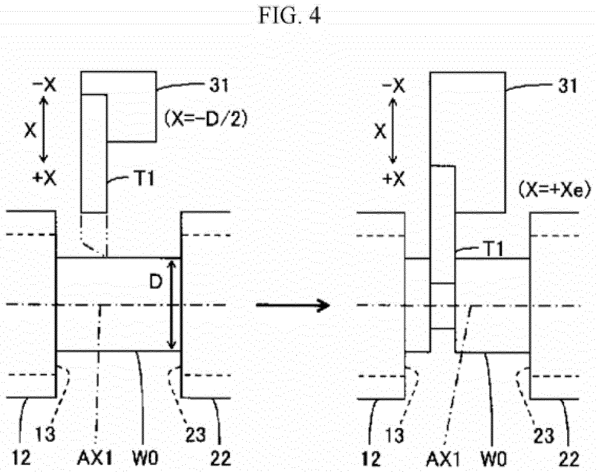

FIG. 4 schematically shows how a cut-off failure happens by a broken cut-off tool. The left diagram shows a broken part of the cut-off tool T1 by a two-dot line. The right diagram shows that the workpiece WO is remained uncut between both the spindles 12 and 22. Such cut-off failure would influence a subsequent machining such as a back machining. It is therefore necessary to determine whether the workpiece has been normally cut-off before starting a subsequent machining.

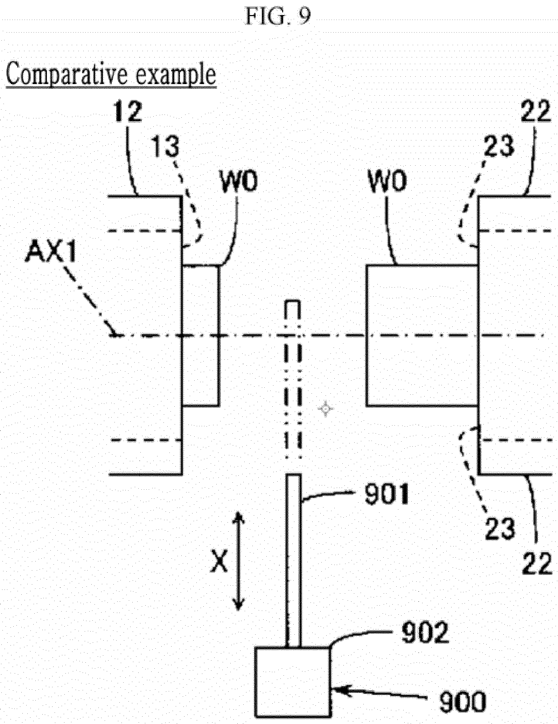

FIG. 9 schematically shows a detecting apparatus 900 in a comparative example to determine whether the workpiece WO is normally cut-off. The detecting apparatus 900 is mounted on a tool post (not shown) movable in the X-axis direction. The detecting apparatus 900 has a workpiece detecting pin 901 movable in a direction perpendicular to the spindle axis AX1 of both the spindles 11 and 12 and a contact switch 902 attached to the end of the pin 901. If the advancing pin 901 does not touch the workpiece WO and the contact switch 902 is thereby not activated, it is determined that the workpiece has been normally cut-off and a start of a subsequent machining is permitted. If the advancing pin 901 touches the workpiece WO and the contact switch 902 is thereby activated, it is determined that a cut-off failure has happened and the machine stops. The workpiece WO is rotated at high speed during and immediately after the cut-off process. The rotation speed of both the spindles 12 and 22 needs reduction before the pin 901 is advanced to prevent a collision with the workpiece WO rotating at high speed.

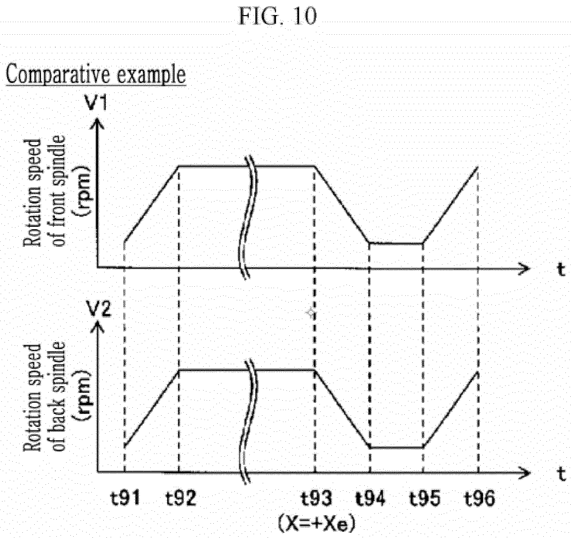

FIG. 10 schematically shows the rotation speed of the spindles 12 and 22 with a lapse of time in the comparative example. The horizontal axis of the graph shows the time (t) and the vertical axis shows rotation speed (rpm: rotations per minute) of the spindles 12 and 22. The upper graph shows the rotation speed V1 of the front spindle 12 with a lapse of time. The lower graph shows the rotation speed V2 of the back spindle 22 with a lapse of time.

At the time t91, the workpiece whose front side has been machined is held by the chuck 23 of the back spindle 22 and synchronous rotation of the spindles 12 and 22 start. A command value for the rotation speed V2 of the back spindle 22 is set to match with a command value for the rotation speed V1 of the front spindle 12. At the time t92, the synchronous high speed operation ends. At the time t93, the tool post reaches the X=+Xe position (the cut-off end position). The workpiece WO still rotates at high speed (1,000 to 4,000 rpm, for example). In the period from the time t93 to the time t94, the NC apparatus 70 decreases the rotation speed of the front spindle 12 and the back spindle 22 each to low speed (300 to 700 rpm, for example) suitable for workpiece detection. In the period from the time t94 to the time t95, the workpiece detecting pin 901 is advanced to determine whether the workpiece is normally cut-off. If the pin 901 does not touch the workpiece WO, the NC apparatus 70 restores high speed rotations suitable for a next machining in the period from the time t95 to the time t96. Accordingly, the determining process in the period from the time t93 to the time t96 is necessarily executed every machining after the tool post reaches the X=+Xe position (the cut-off end position).

In the invention, the front spindle 12 and the back spindle 22 are synchronously operated and then a rotation speed fluctuation is added to the rotation speed V1 of the front spindle 12. The rotation speed V2 of the back spindle 22 is detected to determine whether a fluctuation in the rotation speed V2 of the back spindle 22 is within a predetermined range. It is determined that the workpiece is normally cut-off before the tool post reaches the cut-off end position upon determining that a detected fluctuation in the rotation speed V2 of the back spindle 22 is within a predetermined range. The invention provides a lathe capable of immediately determining that the workpiece is normally cut-off and further eliminates a need for a space for the detecting apparatus 900.

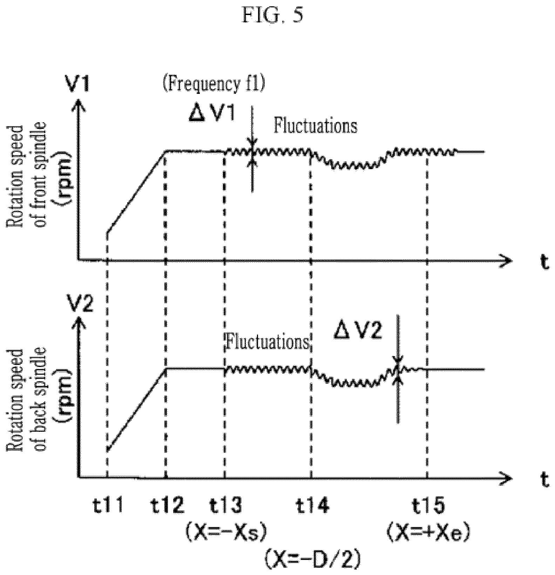

FIG. 5 is a graph schematically showing fluctuations in the rotation speed of the spindle with a lapse of time when the workpiece is normally cut-off. The horizontal axis shows the time (t) and the vertical axis shows rotation speed (rpm) of the front spindle 12 and the back spindle 22. The upper graph shows fluctuations in the rotation speed V1 of the front spindle 12 with a lapse of time. The lower graph shows fluctuations in the rotation speed V2 of the back spindle 22 with a lapse of time.

At the time t11, the workpiece whose front side has been machined may be held by the chuck 23 of the back spindle 22 and a synchronous operation of the front spindle 12 and the back spindle 22 may start. A command value for the rotation speed V2 of the back spindle 22 may be set to match with a command value for the rotation speed V1 (without a fluctuation) of the front spindle 12. At the time t12, the synchronous operation at high speed (1,000 to 4,000 rpm, for example) for the cut-off process may end. The NC apparatus 70 may then start moving the tool post 31 in the +X direction. At the time t13, the tool post 31 may reach the X=-Xs (Xs>0) position corresponding to the rotation speed fluctuation start position. The NC apparatus 70 may start adding a rotation speed fluctuation of a fluctuation width ΔV1 to the rotation speed V1 of the front spindle 12. The fluctuation added to the speed V1 may be also added to the speed V2 of the back spindle 22 through the workpiece WO held by the front spindle 12 and and the back spindle 22.

The fluctuation width ΔV1 may be a difference between the maximum value and the minimum value of the rotation speed. It may be the double of the amplitude representing the maximum displacement from the center value. Assuming that fluctuation in the rotation speed is ± A (rpm), the amplitude may be A (rpm) and the fluctuation width ΔV1 may be 2A (rpm). The amplitude A may be set to 1 to 20 rpm, for example, which is a value smaler than (one to three figures short) the rotation speed V1 (rpm). Frequency f1 of the rotation speed V1 may be 1 to 20 Hz.

At the time t14, the tool post 31 may reach the X=-D/2 position corresponding to the cut-off tool contact position where the cutting edge of the cut-off tool T1 touches the workpiece WO. The rotation speed V1 may decrease due to applied cutting load. The fluctuation may be continuously added to the rotation speed V2 through the workpiece WO held by the front spindle 12 and the back spindle 22. As the cut-off process progresses, rigidity of the cut-off portion of the workpiece WO may be lowered to thereby decrease the fluctuation width ΔV2 of the rotation speed V2. As cutting load becomes smaller, the rotation speed V1 of the front spindle 12 and the rotation speed V2 of the back spindle 22 may be gradually restored. At the time t15, the tool post 31 may reach the X=+Xe position corresponding to the cut-off end position.

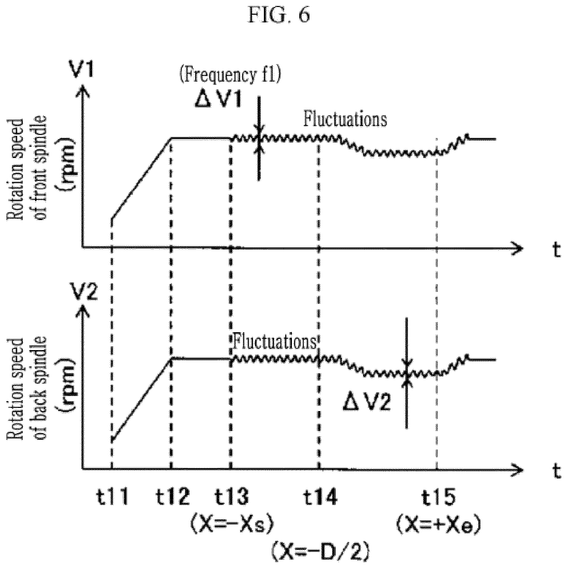

FIG. 6 is a graph showing fluctuations in the rotation speed of the spindle with a lapse of time when a cut-off failure happens. The horizontal axis shows the time (t) and the vertical axis shows rotation speed (rpm) of the front spindle 12 or the back spindle 22. The fluctuations in the rotation speed of the spindle with a lapse of time in the period from the time t11 to the time t14 may be the same as that of FIG. 5. At the time t15, however, the fluctuation width ΔV2 in the rotation speed V2 of the back spindle 22 may be still maintained since the workpiece WO remains uncut between the front spindle 12 and the back spindle 22.

The fluctuation width ΔV2 in the rotation speed V2 of the back spindle 22 may decrease when the workpiece is normally cut-off as shown in FIG. 5. When the decreasing fluctuation width ΔV2 falls within the predetermined range, it may be determined that the workpiece has been normally cut-off. The cut-off success can be determined immediately after the cut-off process, which eliminates the need of detection in the period from the time t93 to the time t96 in FIG. 10 and thereby shortens a cycle time of workpiece machining. Further, the rotation speed fluctuation start position (the X=-Xs position) may follow the cut-off tool contact position (the X=-D/2 position). The time t13 may follow the time t14 in FIG. 5 and FIG. 6.

### (4) Single cut-off process flow:

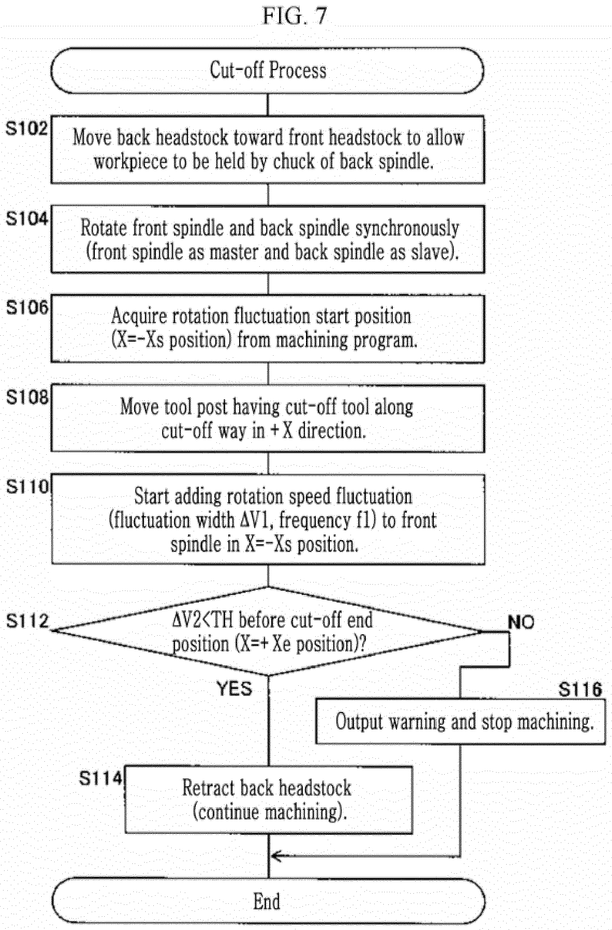

FIG. 7 is a flow chart showing a single cut-off process under control of the NC apparatus 70 executing the interpretive execution program P1. The process may be initiated when a cut-off command in the machining program P2 is read by the NC apparatus 70. It is difficult for the operator to write a machining program enabling such rotation speed fluctuations as shown in FIG. 5 and FIG. 6. It is therefore executed under control of the NC apparatus executing the interpretive execution program P1 in FIG. 7. The cut-off process is being explained also referring to FIG. 2 to FIG. 6.

First, the NC apparatus 70 may drive the Z2-axis motor MZ2 to move the back headstock 21 toward the front headstock 11 and then drive the actuator 24 to allow the back spindle 22 to hold the workpiece WO by the chuck 23 thereof (Step S102). Then, the NC apparatus 70 may output a command value for the rotation speed V1 for the cut-off process to the rotation motors 15 and 25 to start synchronous operation of the front spindle 12 and the back spindle 22 both holding the workpiece WO (S104). The front spindle 12 may be a master while the back spindle 22 may be a slave. A command value for the rotation speed V2 of the back spindle given to the rotation motor 25 may be set to match with the command value for the rotation speed V1 given to the rotation motor 15. Step S104 may start at the time t11 as shown in FIG. 5 and FIG. 6. The NC apparatus 70 may output a synchronous operation end signal when the rotation speed V1 (V2) of the spindle 12 (22) is detected to reach the high speed set for the cut-off process (at the time t12 in FIG. 5 and FIG. 6).

The NC apparatus 70 may acquire an X=-Xs position from the machining program P2 (S106). The X=-Xs position may correspond to the rotation speed fluctuation start position with respect to the X-axis position of the tool post 31. Then the NC apparatus 70 may drive the X3-axis motor MX3 to move the tool post 31 having the cut-off tool T1 along a cut-off way in the +X direction (S108).

When the tool post 31 reaches the X=-Xs position, the NC apparatus 70 may start adding a fluctuation to the rotation speed V1 of the front spindle 12 (S110). The NC apparatus 70 adds a fluctuation width ΔV1 corresponding to a fluctuation component of frequency f1 to the command value given to the rotation motor 15. An electric current or a torque applied to the rotation motor 15 may be controlled to change the rotation speed V1 for the cut-off process to a speed increased by the added fluctuation component. The fluctuation component may not be added to the command value given to the rotation motor 25 for the back spindle 22. S110 may start at the time t13 as shown in FIG. 5 and FIG. 6. The tool post 31 may be in the middle of movement to the cut-off end position (the X=+Xe position). The rotation speed V1 of the front spindle 12 may continue to fluctuate. The rotation motor 25 may detect the rotation speed V2 of the back spindle 22 according to a pulse generated by the encoder 26.

The NC apparatus 70 repeatedly acquires a detected value of the rotation speed V2 from the rotation motor 25 to determine whether the fluctuation width ΔV2 of the detected value of the rotation speed V2 is smaller than a predetermined threshold value TH before the tool post 31 reaches the cut-off end position (the X=+Xe position) (S112). The threshold value TH may be a positive value smaller than the fluctuation width ΔV2 added in the Step 110. If the fluctuation width ΔV2 of the detected value of the rotation speed V2 is smaller than the predetermined threshold value TH (ΔV2<TH), it may be determined that the detected fluctuation in the rotation speed V2 falls within the predetermined range. The threshold value TH may be stored in the ROM 72 or the RAM 73.

If the workpiece has been normally cut-off as shown in FIG. 3, the fluctuation width ΔV2 becomes smaller than the threshold value TH (ΔV2<TH) before the tool post 31 reaches the cut-off end position (the X=+Xe position in FIG. 5). The NC apparatus 70 may drive the Z2-axis motor MZ2 to retract the back headstock 21 away from the front headstock 11 to proceed to a subsequent machining (S114). The subsequent machining may include a back machining applied on the workpiece W2 held by the chuck 23 of the back spindle 22 and a front machining applied on the workpiece W1 held by the chuck 13 of the front spindle 12.

If the cut-off failure has happened as shown in FIG. 4, the fluctuation width ΔV2 in the rotation speed V2 of the back spindle 22 may be still maintained even when the tool post 31 reaches the cut-off end position (the X=+Xe position in FIG. 5) and therefore the fluctuation width ΔV2 may be greater than or equal to the threshold value TH (ΔV2≥TH). The NC apparatus 70 may output a warning and then stop machining (S116). The warning may include an alarm on the display 82 and a warning beep from a sounding device (not shown).

The single cut-off process then ends.

In the embodiment, a rotation speed fluctuation may be added to the rotation speed V1 of the front spindle 12 before initiating the cut-off process. The added fluctuation may not influence the rotation speed V2 of the back spindle 22 if the workpiece is normally cut-off. The cut-off success can be determined only by determining that the fluctuation width ΔV2 of the rotation speed V2 is less than the threshold value TH. The embodiment can shorten the determining time and thereby shorten a cycle time for workpiece machining. The embodiment eliminates a need for a special determining apparatus, which reduces a cost of the lathe.

Further, using the fluctuation width ΔV2 of the rotation speed V2 would increase a sampling frequency of data acquisition and therefore improves determining reliability. The determining steps of the embodiment could be further facilitated in the NC apparatus capable of adding a fluctuation to the rotation speed V1 to control resonance caused by the rotation speed V1 of the front spindle 12.

### (5) Modifications:

The invention may be embodied in various modifications. For example, the invention may be embodied in a lathe of any type including a spindle slidable type and a spindle stationary type.

The tool post 31 may move in the X-axis direction to cut-off the workpiece. Instead, the front and the back spindles may move in the X-axis direction to cut-off the workpiece. Instead, both of the spindles and the tool post may move in the X-axis direction to cut-off the workpiece. The front spindle may be a master while the back spindle may be a slave. Instead, the back spindle may be a master while the front spindle may be a slave. The rotation speed fluctuation may be added to the rotation speed of the back spindle and the rotation speed of the front spindle may be detected to determine whether a detected fluctuation in the rotation speed of the front spindle is within the predetermined range.

The order of the steps as described above may be appropriately changed. For example, S106 may be executed before S102 or S104 in FIG.7. S112 may start at any time including any finish time of machining in the machining program and may end at any time.

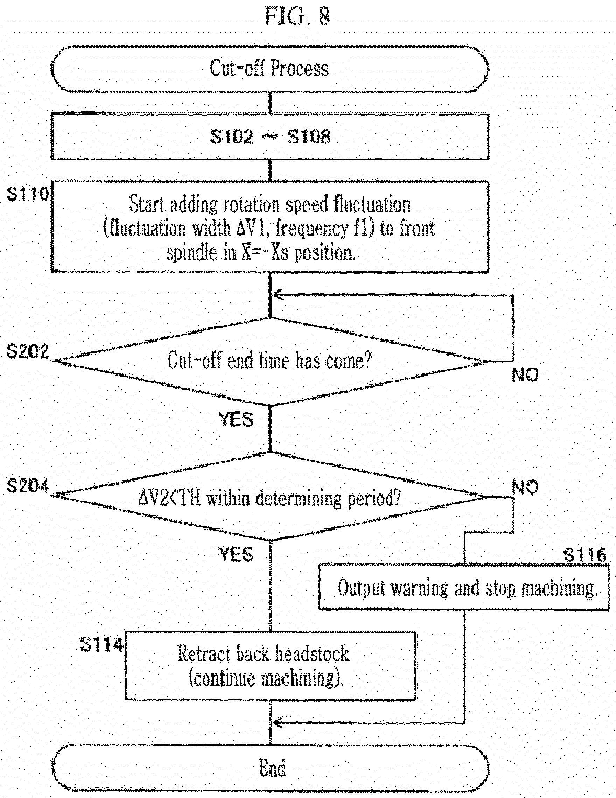

FIG. 8 shows an example of another single cut-off process executed by the NC apparatus 70 where S202 and S204 replace S112 (FIG. 7). FIG. 8 collectively shows S102 to S108. The NC apparatus 70 may execute S102 to S110 and start adding a rotation speed fluctuation to the rotation speed V1 of the front spindle 12 when the tool post 31 reaches the X=-Xs position corresponding to the rotation speed fluctuation start position. In S202, the NC apparatus 70 may acquire a cut-off end time from the machining program P and determine whether the cut-off end time has come. The cut-off end time may be any time including the time when the tool post reaches the X=+Xe position. S 202 may be repeated until the cut-off end time comes.

When the cut-off end time has come, the NC apparatus 70 may repeatedly acquire a detected value of the rotation speed V2 from the rotation motor 25 within a predetermined period of time to determine whether an acquired fluctuation width ΔV2 is smaller than the threshold value TH (0<TH<ΔV2) (S204). If a plurality of fluctuation widths have been acquired during the period, a calculated arithmetic mean may be used as the acquired fluctuation width ΔV2. Instead, among the plurality of the fluctuation widths, the maximum and the miminum values may be excluded before the calculation of the arithmetic mean. If the fluctuation width ΔV2 is smaller than the threshold value TH, a start of a subsequent machining may be permitted (S114). If the fluctuation width ΔV2 is greater than or equal to the threshold value TH, the NC apparatus 70 may output a warning and stop machining (S116).

In FIG. 8, the fluctuation may be added to the rotation speed V1 of the front spindle 12 before the start of the cut-off process. The added fluctuation may never influence the rotation speed V2 of the back spindle 22 in the determining steps immediately after the end of the cut-off process if the workpiece has been normally cut off. The cut-off success can be determined immediately after the end of the cut-off process upon determining that the fluctuation width ΔV2 is smaller than the threshold value TH. The embodiment shortens the determining time, resulting in a shortened cycle time of machining. Further, the embodiment increases a sampling frequency of data acquisition and thereby improves determining reliability.

The NC apparatus may determine whether the fluctuation width ΔV2 is smaller than the threshold value TH when the tool post 31 reaches the cut-off end position (S112) in FIG. 7 or when the cut-off end time comes (S202) in FIG. 8. Instead, the NC apparatus may determine whether the fluctuation width ΔV2 is smaller than the threshold value TH after a predetermined time period elapses since the tool post 31 has reached the cut-off end position or after a predetermined time period elapses since the the cut-off end time has come. A plurality of the fluctuation widths ΔV2 smaller than the threshold value TH may be continuously detected during the predetermined time period, which increases a sampling frequency of data acquisition and thereby improves determining reliability. A calculated arithmetic mean based on the plurality of data acquired during the period may be used as the acquired fluctuation width ΔV2. Instead, the maximum and the miminum values may be excluded before the calculation of the arithmetic mean.

### (6) Conclusion:

As described above, the invention provides a lathe capable of shortening a cycle time of workpiece machining in various embodiments.

### DESCRPTION OF SYMBOLS

- 1: lathe
- 11: front headstock
- 12: front spindle
- 13: chuck
- 14: actuator
- 15: rotation motor
- 16: encoder
- 18: guide bush
- 21: back headstock
- 22: back spindle
- 23: chuck
- 24: actuator
- 25: rotation motor
- 26: encoder
- 31: tool post
- 70: NC apparatus
- AX1, AX2: spindle axis
- MX3: X3-axis motor
- T0: tool
- T1: cut-off tool
- U1: control unit
- WO, W1, W2: workpiece

## Claims

1. A lathe (1) comprising:
a first spindle (12) configured to rotate on a spindle axis (AX1, AX2) and to hold a workpiece (W0, W1, W2);
a second spindle (22) opposite the first spindle (12) configured to rotate on the spindle axis (AX1, AX2) and to hold the workpiece (W0, W1, W2);
a tool post (31) on which a cut-off tool (T1) is provided to cut-off the workpiece (W0, W1, W2) held by the first spindle (12) and the second spindle (22); and
a control unit (U1) configured to control rotation of the first spindle (12) and the second spindle (22) and further to control relative movement of the first and the second spindles (12, 22) and the tool post (31) to cut-off the workpiece (W0, W1, W2),
wherein the control unit (U1) is further configured to add a rotation speed fluctuation to a rotation speed (V1) of the first spindle (12) after rotating the first spindle (12) and the second spindle (22) synchronously such that the fluctuation adds a fluctuation width (ΔV1) corresponding to a fluctuation component of a frequency (f1) to the rotation speed of the first spindle (12) and to detect a rotation speed (V2) of the second spindle (22),
the lathe being **characterized in that**
the control unit (U1) is configured to add the fluctuation during the time that the control unit moves the tool post to a cut-off end position and the control unit (U1) is configured to determine that the workpiece (W0, W1, W2) is normally cut-off upon determining, before the tool post (31) reaches the cut-off end position, by detecting that a fluctuation width (ΔV2) of the detected value of the rotation speed of the rotation speed (V2) of the second spindle (22) is smaller than a predetermined threshold value (TH).

## Patentansprüche

1. Drehmaschine (1), umfassend:
eine erste Spindel (12), die konfiguriert ist, um sich auf einer Spindelachse (AX1, AX2) zu drehen und ein Werkstück (W0, W1, W2) zu halten;
eine zweite Spindel (22) gegenüberliegend der ersten Spindel (12), die konfiguriert ist, um sich auf der Spindelachse (AX1, AX2) zu drehen und das Werkstück (W0, W1, W2) zu halten;
einen Werkzeughalter (31), an dem ein Schneidewerkzeug (T1) vorgesehen ist, um das Werkstück (W0, W1, W2), das von der ersten Spindel (12) und der zweiten Spindel (22) gehalten wird, zu schneiden; und
eine Steuereinheit (U1), die konfiguriert ist, um die Drehung der ersten Spindel (12) und der zweiten Spindel (22) zu steuern und ferner die relative Bewegung der ersten und der zweiten Spindel (12, 22) und des Werkzeughalters (31) zu steuern, um das Werkstück (W0, W1, W2) zu schneiden,
wobei die Steuereinheit (U1) ferner konfiguriert ist, um eine Drehzahlschwankung zu einer Drehzahl (V1) der ersten Spindel (12) hinzuzufügen, nachdem die erste Spindel (12) und die zweite Spindel (22) synchron gedreht wurden, so dass die Schwankung eine Schwankungsbreite (ΔV1), die einer Schwankungskomponente einer Frequenz (f1) entspricht, zu der Drehzahl der ersten Spindel (12) hinzufügt, und um eine Drehzahl (V2) der zweiten Spindel (22) zu erfassen,
wobei die Drehmaschine **dadurch gekennzeichnet ist, dass**
die Steuereinheit (U1) konfiguriert ist, um die Schwankung während der Zeit hinzuzufügen, in der die Steuereinheit den Werkzeughalter zu einer Schneideendposition bewegt, und die Steuereinheit (U1) konfiguriert ist, um zu bestimmen, dass das Werkstück (W0, W1, W2) bei Bestimmung normal abgeschnitten wird, bevor der Werkzeughalter (31) die Schneideendposition erreicht, indem erfasst wird, dass eine Schwankungsbreite (ΔV2) des erfassten Werts der Drehzahl der Drehzahl (V2) der zweiten Spindel (22) kleiner als ein vorbestimmter Schwellenwert (TH) ist.

## Revendications

1. Tour (1) comprenant :
une première broche (12) configurée pour être mise en rotation sur un axe broche (AX1, AX2) et pour tenir une pièce à œuvrer (W0, W1, W2) ;
une seconde broche (22) opposée à la première broche (12) configurée pour être mise en rotation sur l'axe broche (AX1, AX2) et pour tenir la pièce à œuvrer (W0, W1, W2) ;
un porte-outil (31) sur lequel un outil de découpe (T1) est prévu pour découper la pièce à œuvrer (W0, W1, W2) tenue par la première broche (12) et la seconde broche (22) ; et
une unité de commande (U1) configurée pour commander une rotation de la première broche (12) et de la seconde broche (22) et pour en outre commander un déplacement relatif de la première et de la seconde broche (12, 22) et du porte-outil (31) pour découper la pièce à œuvrer (W0, W1, W2),
dans lequel l'unité de commande (U1) est en outre configurée pour ajouter une fluctuation de vitesse de rotation (V1) de la première broche (12) après rotation de la première broche (12) et de la seconde broche (22) de manière synchrone de telle sorte que la fluctuation ajoute une largeur de fluctuation (ΔV1), correspondant à une composante de fluctuation d'une fréquence (f1), à la vitesse de rotation de la première broche (12), et pour détecter une vitesse de rotation (V2) de la seconde broche (22),
le tour étant **caractérisé en ce que**
l'unité de commande (U1) est configurée pour ajouter la fluctuation pendant le temps où l'unité de commande déplace le porte-outil jusqu'à une position finale de découpe, et l'unité de commande (U1) est configurée pour déterminer que la pièce à œuvrer (WO, W1, W2) est découpée normalement via une détermination, avant que le porte-outil (31) atteigne la position finale de découpe, en détectant qu'une largeur de fluctuation (ΔV2) de la valeur détectée de la vitesse de rotation de la vitesse de rotation (V2) de la seconde broche (22) est inférieure à une valeur seuil prédéterminée (TH).
